# EUROPEAN PATENT APPLICATION

(11) **EP 4 790 006 A1**
(43) Date of publication of application: **12.08.2026**
(21) Application number: 25216845.5
(22) Date of filing: 19.11.2025
(51) Int. Cl.: B66B 17/20

(54) **FREIGHT ELEVATOR PALLET RACK SYSTEM**

(30) Priority: 07.02.2025 US 202519048526
(71) Applicant: Otis Elevator Company, Farmington, Connecticut 06032 (US)
(72) Inventor: Roberts, Randall, Farmington, 06032 (US); Hsu, Arthur, Farmington, 06032 (US)
(74) Representative: Schmitt-Nilson Schraud Waibel Wohlfrom Patentanwälte Partnerschaft mbB

(57) **Abstract**

An elevator car cargo system includes two opposing sidewalls extending from a car floor, and a stacking rack including two or more sets of horizontally-extending rails to define two or more horizontally-extending tiers and one or more vertically-extending columns in the elevator car for loading and unloading cargo. a method of operating an elevator system includes driving an elevator car along a hoistway. The elevator car includes two opposing sidewalls extending from a car floor and a stacking rack including two or more sets of horizontally-extending rails to define two or more horizontally-extending tiers and one or more vertically-extending columns in the elevator car for loading and unloading cargo. The elevator car is stopped at a landing floor of the hoistway, and cargo is selectably loaded onto and/or unloaded from the stacking rack.

## Description

Exemplary embodiments pertain to the art of elevator systems, and in particular to management of cargo loading and unloading in elevator systems.

Much of the duty cycle of elevator systems, especially freight elevator systems is associated with loading and unloading the elevator car. This process typically takes much longer than the actual vertical transport time of the cargo. Another limitation of current freight elevator systems is their inability to efficiently pack cargo loads utilizing the full available volume in the elevator cabin space. In addition, the coordination of the demands for individual goods and other loads, such as trash loads is not managed well. This results in the freight elevator's effective handling capacity being well below its actual potential.

In one exemplary embodiment, an elevator car cargo system includes two opposing sidewalls extending from a car floor, and a stacking rack including two or more sets of horizontally-extending rails to define two or more horizontally-extending tiers and one or more vertically-extending columns in the elevator car for loading and unloading cargo.

Particular embodiments further may include at least one, or a plurality of, the following optional features, alone or in combination with each other:

Additionally or alternatively, in this or other embodiments one or more cargo carts are configured to be loaded onto a set of rails of the sets of rails.

Additionally or alternatively, in this or other embodiments the one or more cargo carts are wheeled.

Additionally or alternatively, in this or other embodiments the one or more cargo carts are one or manually-driven, motor driven or robotically-driven.

Additionally or alternatively, in this or other embodiments at least a portion of the stacking rack is selectably installable to and removable from the elevator car.

Additionally or alternatively, in this or other embodiments the portion of the stacking rack is selectably movable via a robotic apparatus operably connected to the portion of the stacking rack.

Additionally or alternatively, in this or other embodiments the system includes elevator car doors, wherein a first elevator car door of the elevator car doors is openable without opening a second elevator car door of the elevator car doors.

In another exemplary embodiment, an elevator system includes a hoistway, and an elevator car drivable along the hoistway. The elevator car includes two opposing sidewalls extending from a car floor, and a stacking rack including two or more sets of horizontally-extending rails to define two or more horizontally-extending tiers and one or more vertically-extending columns in the elevator car for loading and unloading cargo.

Particular embodiments further may include at least one, or a plurality of, the following optional features, alone or in combination with each other:

Additionally or alternatively, in this or other embodiments one or more cargo carts are configured to be loaded onto a set of rails of the sets of rails.

Additionally or alternatively, in this or other embodiments the one or more cargo carts are wheeled.

Additionally or alternatively, in this or other embodiments the one or more cargo carts are one or manually-driven, motor driven or robotically-driven.

Additionally or alternatively, in this or other embodiments at least a portion of the stacking rack is selectably installable to and removable from the elevator car.

Additionally or alternatively, in this or other embodiments the portion of the stacking rack is selectably movable via a robotic apparatus operably connected to the portion of the stacking rack.

Additionally or alternatively, in this or other embodiments, the system includes elevator car doors, wherein a first elevator car door of the elevator car doors is openable without opening a second elevator car door of the elevator car doors.

In yet another exemplary embodiment, a method of operating an elevator system includes driving an elevator car along a hoistway. The elevator car includes two opposing sidewalls extending from a car floor and a stacking rack including two or more sets of horizontally-extending rails to define two or more horizontally-extending tiers and one or more vertically-extending columns in the elevator car for loading and unloading cargo. The elevator car is stopped at a landing floor of the hoistway, and cargo is selectably loaded onto and/or unloaded from the stacking rack.

Particular embodiments further may include at least one, or a plurality of, the following optional features, alone or in combination with each other:

Additionally or alternatively, in this or other embodiments the cargo is contained in one or more carts configured to be loaded onto a set of rails.

Additionally or alternatively, in this or other embodiments the one or more cargo carts are one or manually-driven, motor driven or robotically-driven.

Additionally or alternatively, in this or other embodiments the one or more cargo carts loaded onto a first tier of the two or more tiers has a different size than the one or more cargo carts loaded onto a second tier of the two or more tiers.

Additionally or alternatively, in this or other embodiments elevator car doors are configured to open vertically at a landing floor.

Additionally or alternatively, in this or other embodiments a first elevator car door of the elevator car doors is openable without opening a second elevator car door of the elevator car doors.

The following descriptions should not be considered limiting in any way. With reference to the accompanying drawings, like elements are numbered alike:
FIG. 1 is a perspective view of an embodiment of an elevator systems;
FIG. 2 is a schematic illustration of an embodiment of an elevator car;
FIG. 3 is a schematic illustration of an embodiment of a rail of an elevator car;
FIG. 4 is a schematic illustration of a first cargo unloading operation of an elevator system;
FIG. 5 is a schematic illustration of a second cargo unloading operation of an elevator system;
FIG. 6 is a schematic illustration of a cargo loading operation of an elevator system;
FIG. 7 is a front view of an embodiment of a pallet system of an elevator system; and
FIG. 8 is a side view of an embodiment of a pallet system of an elevator system.

A detailed description of one or more embodiments of the disclosed apparatus and method are presented herein by way of exemplification and not limitation with reference to the Figures.

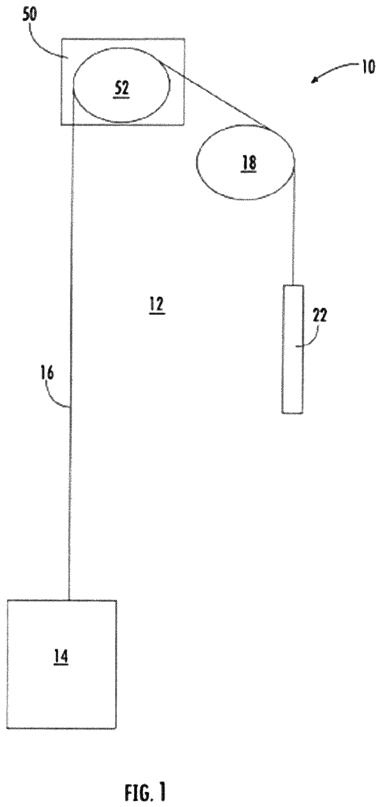

Shown in FIG. 1 is a schematic view of an exemplary traction elevator system 10. Features of the elevator system 10 that are not required for an understanding of the present invention (such as the guide rails, safeties, *etc.*) are not discussed herein. The elevator system 10 includes an elevator car 14 operatively suspended and/or propelled in a hoistway 12 with one or more tension members, for example belts 16. While in the following description, belts 16 are the tension members utilized in the elevator system, one skilled in the art will readily appreciate that the present disclosure may be utilized with other tension members, such as ropes or braided tapes. The one or more belts 16 interact with sheaves 18 and 52 to be routed around various components of the elevator system 10. Sheave 18 is configured as a diverter, deflector or idler sheave and sheave 52 is configured as a traction sheave, driven by a machine 50. Movement of the traction sheave 52 by the machine 50 drives, moves and/or propels (through traction) the one or more belts 16 that are routed around the traction sheave 52. Diverter, deflector or idler sheaves 18 are not driven by a machine 50, but help guide the one or more belts 16 around the various components of the elevator system 10. The one or more belts 16 could also be connected to a counterweight 22, which is used to help balance the elevator system 10 and reduce the difference in belt tension on both sides of the traction sheave during operation. The sheaves 18 and 52 each have a diameter, which may be the same or different from each other. The elevator in FIG. 1 is referred to as a 1:1 configuration. The invention described here also applies to other elevator configurations, including but not limited to 2:1 roped underslung, 2:1 roped overslung, machine below roping and self-propelled ropeless systems.

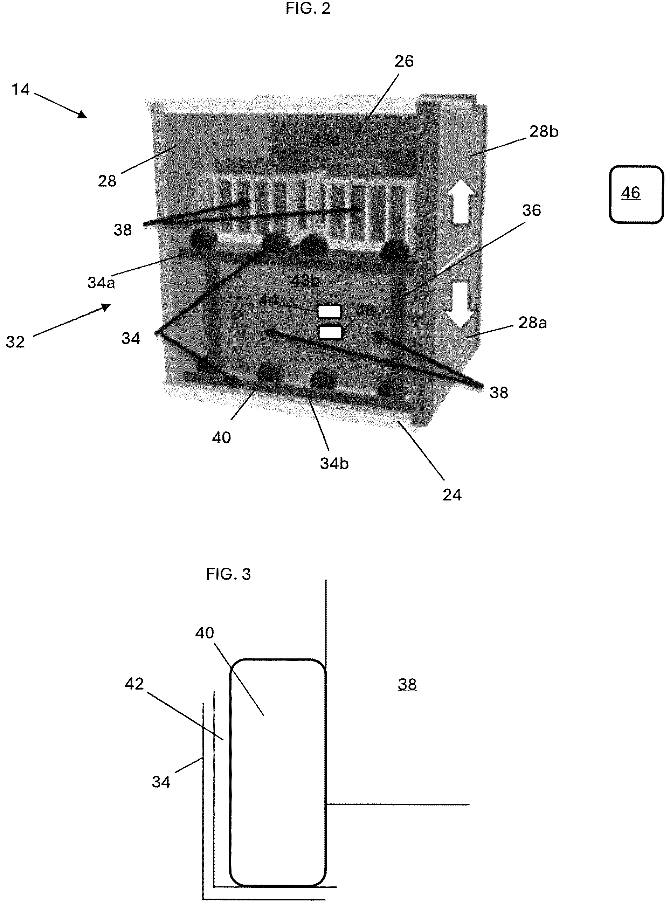

Referring now to FIG. 2, illustrated is an embodiment of an elevator car 14. In this case a freight elevator car 14. The elevator car 14 includes a floor 24, opposing side walls 26 and two sets of car doors 28 located at and defining opposing end walls of the elevator car 14. In the embodiments illustrated and described herein, the car doors 28 open in a vertical opening direction 30, but one skilled in the art will readily appreciate that this is merely exemplary and in other embodiments the car doors 28 may open in, for example, a horizontal opening direction. While in the embodiment illustrated in FIG. 2 there are two sets of doors 28, one skilled in the art will readily appreciate that in some embodiments the elevator car 14 includes only one set of doors 28.

A stacking rack 32 is located inside the elevator car 14 and may be secured to one or more of the floor 24 and the side walls 26. The stacking rack 32 includes horizontally extending rails 34 and vertically extending supports 36 connecting and supporting the rails 34. When the elevator car 14 is loaded, the rails 34 are supportive of carts 38, which in some embodiments have a plurality of wheels 40 for movement of the carts 38. Referring now to FIG. 3, in some embodiments the rails 34 include a rail recess 42 in which a wheel 40 is received and moveable along.

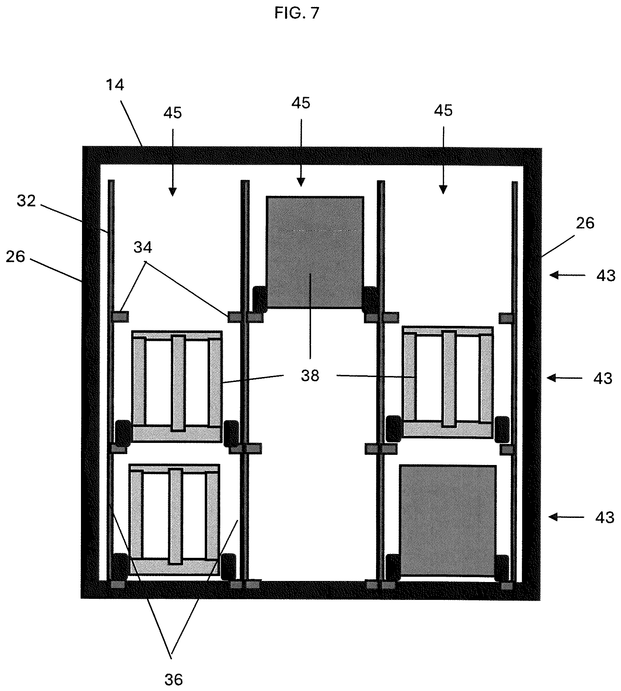

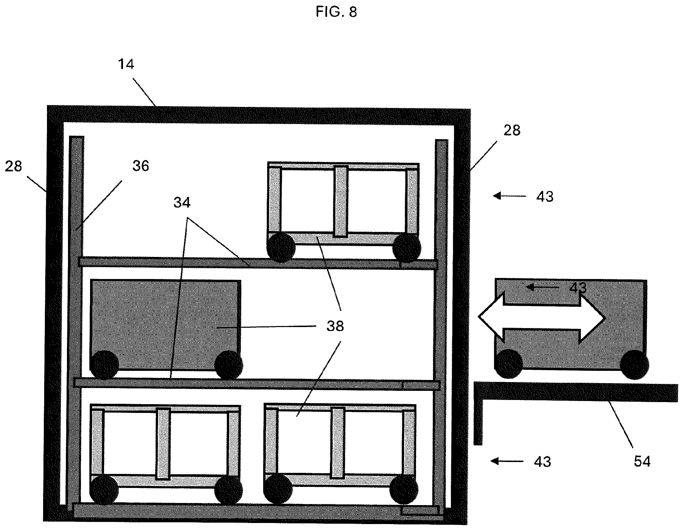

Referring again to FIG. 2, some embodiments include two sets of rails 34 vertically spaced apart, defining two tiers 43a and 43b, allowing for carts 38 to be loaded onto upper rails 34a and also onto lower rails 34b. While in the illustrated embodiment, two sets of rails 34 are utilized, one skilled in the art will readily appreciate that, in other embodiments three or more sets of rails 34 may be used to allow for increased flexibility and capacity for loading and carrying cargo in the elevator car 14, such as illustrated in FIGS. 7 and 8. In the front view of FIG. 7 and the side view of FIG. 8, the rails 34 and supports 36 are arranged to define a stacking rack 32 having three horizontal tiers 43, and three vertical columns 45, wherein the columns are defined in a width direction of the elevator car 14 between the side walls 26 of the elevator car 14. Additionally, in the illustrated embodiments, two carts 38 may be accommodated in a depth direction of the elevator car 14 defined between the sets of elevator doors 28. One skilled in the art will readily appreciate that the embodiments illustrated are merely exemplary, and that other stacking rack 32 arrangements having other quantities of tiers 43 and columns 45 are contemplated within the scope of the present disclosure.

In some embodiments, the carts 38 are manually operated, in other words the carts 38 are pushed or pulled by a user into and/or out of the elevator car 14. In other embodiments, the carts 38 are driven by a motor 44, which in some embodiments may be controlled by a user via controller 46 or may be autonomous or robotic, or may be semi-autonomously driven by an onboard controller 48. In some embodiments the stacking rack 32 is fixed in the elevator car 14, so the carts 38 are loaded onto the stacking rack 32 and unloaded from the stacking rack 32 while the stacking rack 32 is inside the elevator car 14. In other embodiments, the stacking rack 32 is removable from the elevator car 14 and the carts 38 may be loaded onto the stacking rack 32 and unloaded from the stacking rack 32 while the stacking rack 32 is located outside of the elevator car 14. Movement of the stacking rack 32 may be accomplished manually, by a motor drive, or by autonomous operation via a robot, or semi-autonomously. In some embodiments the stacking rack 32 is a unitary structure, while in other embodiments the stacking rack 32 is modular such that individual tiers 43 and/or individual columns 45 may be individually removed from the elevator car 14 or loaded onto the elevator car 14. Additionally, individual tiers 43 and/or columns 45 of the stacking rack 32 may have provisions, such as tracks or the like, so tiers 43 and/or columns 45 may be removed by, for example, a first tier 43a driving over a second tier 43b.

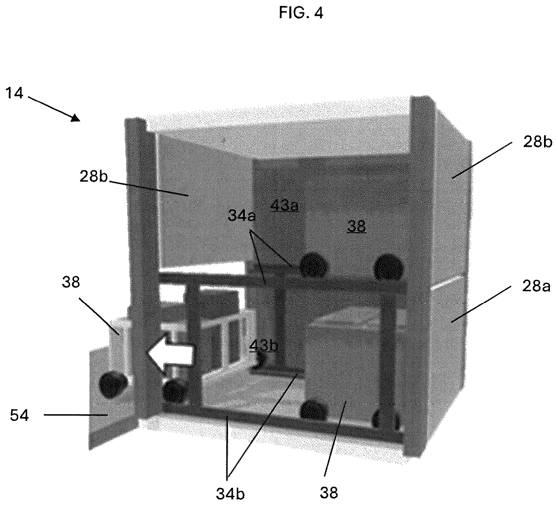

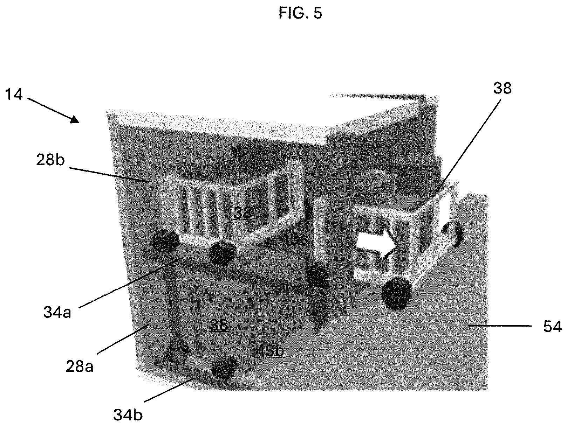

Referring now to FIGs. 4 and 5, the stacking rack 32 and the vertically-opening car doors 28 allow for additional flexibility and efficiency in the operation of the elevator system 10 and loading and unloading of elevator car 14. First, as shown in FIG. 4, opening of only a lower door 28a of the car doors 28 provides access to the lower rails 34b. This allows carts 38 to be loaded into the lower rails 34b of the elevator car 14 and unloaded from the lower rails 34b without accessing or disturbing any carts 38 or other cargo on the upper rails 34a.

Turning now to FIG. 5, the elevator system 10 may also be operated to load and unload the upper rails 34a by opening an upper door 28b of the car doors 28. In this operation, the elevator car 14 is driven and then stopped so that the upper rails 34a are level with a landing floor 54. The upper door 28b is then opened, while the lower door 28a remains closed. This provides access to the upper rails 34a for loaded carts 38 onto or removing carts 38 from the upper rails 34a without accessing or disturbing the carts 38 or other cargo at the lower rails 34b or lower portion of the elevator car 14. While loading and unloading of carts 38 from one end of the elevator car 14 is illustrated in FIGS. 4 and 5, one skilled in the art will readily appreciate that opening both sets of elevator doors 28 will allow for loading and unloading carts 38 at each end of the elevator car 14, in some cases simultaneously. In some embodiments, landing floors 54 are positioned such that at one set of elevator doors 28 carts 38 may be loaded and unloaded at the first tier 43a, and at another set of elevator doors 28, cart 38 may be loaded and unloaded at the second tier 43b. One skilled in the art will readily appreciate that while operation is described here for stacking racks 32 having two tiers 43, the principles of operation for elevator systems 10 having stacking racks 32 defining three or more tiers 43 is substantially the same.

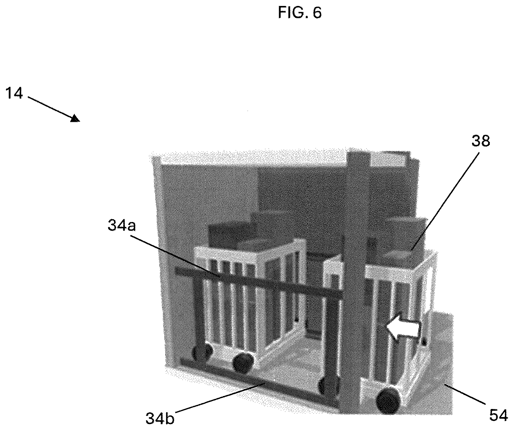

As shown in FIG. 6, when no cargo is present on the upper rails 34a, oversized carts 38 or other cargo, which extend higher that the upper rails 34a, may be used and loaded onto the lower rails 34b.

The benefits of this elevator system 10 include, but are not limited to, the use of standardized moveable carts 38 with controlled dimensions tailored for the freight elevator car 14 allow for efficient loading and unloading of goods and trash. The multi-tier rack 32 system allows for more efficient packing and unpacking of the elevator car 14 to improve the elevator system's cargo handling capacity. The vertically opening car doors 28 and the associated elevator controls allow for loading and unloading to upper tier rack load, and front and rear compartments in the rack 32 system allow for loads to be moved more efficiently with coordinated dispatching to optimize material flows in the building in which the elevator system 10 is installed.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An elevator car cargo system, comprising:
two opposing sidewalls extending from a car floor; and
a stacking rack including two or more sets of horizontally-extending rails to define two or more horizontally-extending tiers and one or more vertically-extending columns in the elevator car for loading and unloading cargo.

2. The elevator car cargo system of claim 1, further comprising one or more cargo carts configured to be loaded onto a set of rails of the sets of rails.

3. The elevator car cargo system of claim 2, wherein the one or more cargo carts are wheeled.

4. The elevator car cargo system of claim 2 or 3, wherein the one or more cargo carts are one or manually-driven, motor driven or robotically-driven.

5. The elevator cargo system of any of claims 1 to 4, wherein at least a portion of the stacking rack is selectably installable to and removable from the elevator car.

6. The elevator car cargo system of claim 5, wherein the portion of the stacking rack is selectably movable via a robotic apparatus operably connected to the portion of the stacking rack.

7. The elevator car cargo system of claim 6, further comprising elevator car doors, wherein a first elevator car door of the elevator car doors is openable without opening a second elevator car door of the elevator car doors.

8. An elevator system, comprising:
a hoistway; and
an elevator car drivable along the hoistway, the elevator car including
the elevator car cargo system of any of claims 1 to 7.

9. A method of operating an elevator system, comprising:
driving an elevator car along a hoistway, the elevator car including:
two opposing sidewalls extending from a car floor; and
a stacking rack including two or more sets of horizontally-extending rails to define two or more horizontally-extending tiers and one or more vertically-extending columns in the elevator car for loading and unloading cargo;
stopping the elevator car at a landing floor of the hoistway; and
selectably loading cargo onto and/or unloading cargo from the stacking rack.

10. The method of claim 9, wherein the cargo is contained in one or more carts configured to be loaded onto a set of rails.

11. The method of claim 10, wherein the one or more cargo carts are one or manually-driven, motor driven or robotically-driven.

12. The method of claim 10 or 11, wherein the one or more cargo carts loaded onto a first tier of the two or more tiers has a different size than the one or more cargo carts loaded onto a second tier of the two or more tiers.

13. The method of any of claims 9 to 12, further comprising elevator car doors configured to open vertically at a landing floor.

14. The method of claim 13, wherein a first elevator car door of the elevator car doors is openable without opening a second elevator car door of the elevator car doors.
